# EUROPÄISCHE PATENTANMELDUNG

(11) **EP 0 609 744 A1**
(43) Veröffentlichungstag der Anmeldung: **10.08.1994**
(21) Anmeldenummer: 94100969.8
(22) Anmeldetag: 24.01.1994
(51) Int. Cl.: H04M 1/03

(54) **Handapparat eines schnurgebundenen Telefonapparates**

(30) Priorität: 03.02.1993 CH 312/93
(71) Anmelder: ASCOM ZELCOM AG, CH-8634 Hombrechtikon (CH)
(72) Erfinder: Sauerbrey, Arnim, CH-8345 Adetswil (CH); Dittli, Erich, CH-8854 Galgenen (CH)
(74) Vertreter: Keller, René, Dr.

(57) **Zusammenfassung**

Die untere Gehäuseschale (14) des Handapparates trägt hörseitig eine Hörkapsel (17) und sprechseitig ein Trägerteil (22). Diese Einheiten sind durch Halteflächen (24, 115) und Schnapphaken (16, 15) starr und stossfest verankert. Das Trägerteil (22) trägt vier aus federelastischem Blech gestanzte Leiter, deren Enden die Pole einer Steckbuchse (21) bilden, in die der Stecker der Geräteschnur zur Verbindung des Handapparates mit einem Basisapparat einsteckbar ist. Die mechanische Führung dieser Steckbuchse (21) wird gemeinsam durch die Gehäuseschale (14) und das Trägerteil (22) gebildet. Das Trägerteil (22) trägt weiter eine (verdeckte) Sprechkapsel, deren Anschlüsse mit zwei der Leiter verlötet sind. Die Hörkapsel (17) weist zwei starre Drähte (27, 28) auf, die mit den anderen beiden Leitern des Trägerteils (22) verlötet sind. Hierzu sind die Enden dieser Leiter als Lötfahnen ausgebildet.

## Beschreibung

Die Erfindung betrifft den Handapparat eines schnurgebundenen Telefonapparates entsprechend dem Oberbegriff von Anspruch 1. Sie betrifft weiter ein Verfahren zur Herstellung eines solchen Handapparates.

Schnurgebundene Telefonapparate, bestehend aus einem Basisgerät, einem Handapparat und einer Apparateschnur sind bestens bekannt.

Aus der Schrift DE 2 433 824 ist speziell ein Handapparat bekannt, der zwei Gehäuseschalen aufweist, die gemeinsam im zusammengesetzten Zustand eine allseitig geschlossene Einheit bilden, in die elektroakustische Wandler in Form von einer Hörkapsel und einer Sprechkapsel eingesetzt sind.

Aus der Schrift EP 303 787 ist ein weiterer derartiger Handapparat bekannt, bei dem die elektroakustischen Kapseln mit Schneidklemmverbindern ausgestattet sind. Die elektrischen Verbindungsleitungen im Inneren des Handapparates bestehen aus Leitern, die durch eine gemeinsame Folie so gehalten werden, dass sie beim Zusammenfügen der beiden Gehäuseschalen durch Drucknasen in die Schneidklemmverbinder gedrückt und anschliessend dort auf Dauer gehalten werden. Die Schrift gibt weiter einen Stecker zum Anschluss der Apparateschnur an, die den Handapparat mit dem Basisgerät des Telefons verbindet. Derartige Steckverbinder sind heute genormt, wobei die Apparateschnur den Stecker aufweist, der in die zugeordnete Steckbuchse am Handapparat einsteckbar ist. Hierbei gibt es eine Verriegelung, die ein Herausfallen des Steckers auch unter Zug verhindert.

Den Aufbau einer Hörkapsel zeigt beispielsweise die Schrift CH 649 184. Es handelt sich hierbei um eine eigenständige Einheit, die bei der Montage in den Handapparat eingelegt und elektrisch mit der Steckbuchse verbunden wird.

Aus der Schrift DE 29 39 479 ist eine Sprechkapsel bekannt, die als Elektret-Richtmikrofon aufgebaut ist. Diese Kapsel hat ein zylinderförmiges Gehäuse mit zwei elektrischen Anschlüssen und bildet eine sehr handliche Einheit.

Es ist nun weiter bekannt, dass die Hör- und die Sprechkapseln zur Verbesseung der akustischen Eigenschaften des "Gesamtsystems Telefon" mit akustischen Resonanzräumen gekoppelt sein sollen. Bevorzugt werden sogenannte Helmholtz-Resonatoren verwendet.

Telefonapparate stehen heute unter einem sehr starken Kostendruck. Es besteht daher ausgehend von den genannten Schriften die Aufgabe, einen Handapparat anzugeben, der bezüglich seines Aufbaus und der notwendigen Montagearbeiten weiter rationalisiert ist und sich vor allem für eine weitgehend automatisierte Fertigung eignet.

Die Lösung dieser Aufgabe wird durch den kennzeichnenden Teil der unabhängigen Ansprüche gegeben. Die abhängigen Ansprüche geben Ausgestaltungen der Erfindung wieder.

Im folgenden wird die Erfindung anhand von fünf Figuren beispielsweise näher beschrieben. Es zeigen:
Fig. 1 und 2 - Längsschnitt durch bzw. Aufsicht in einen Handapparat
Fig. 3 und 4 - geschnittene Seitenansicht bzw. Aufsicht eines Trägerteils
Fig. 5 - halb geöffnete Aufsicht auf eine Hörkapsel

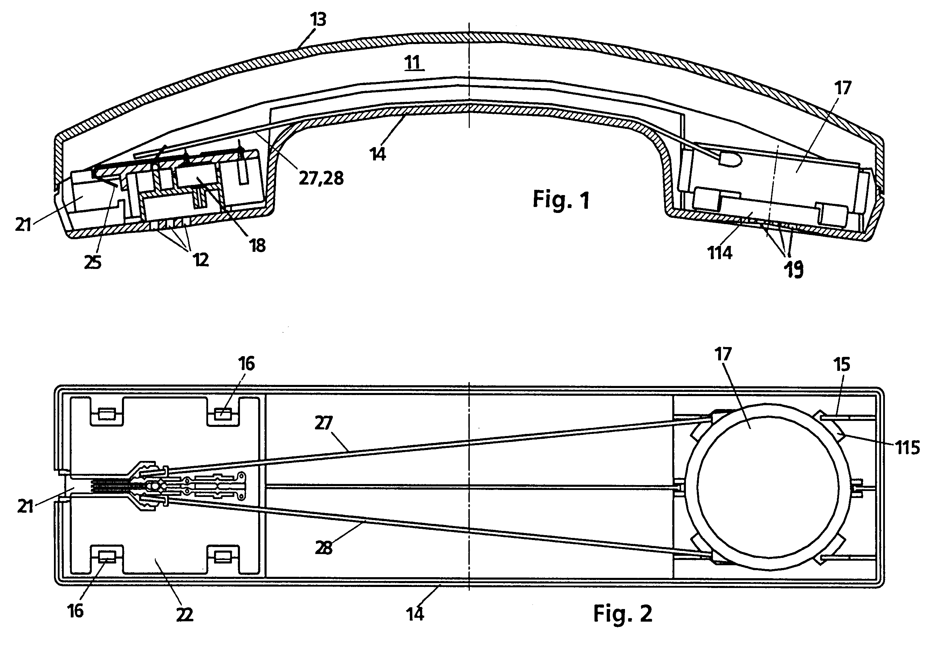

Fig. 1 zeigt einen Längsschnitt durch einen Handapparat 11 eines schnurgebundenen Telefons in etwa natürlicher Grösse, Fig. 2 die zugehörige Aufsicht in den geöffneten Handapparat 11. Der Handapparat umfasst eine obere und eine untere Gehäuseschale 13, 14, die im zusammengesetzten Zustand eine im wesentlichen allseitig geschlossene Einheit bilden. Im Inneren dieser Einheit sind auf der einen Seite die hörseitigen Funktionseinheiten, insbesondere eine Hörkapsel 17 der genannten Art und auf der anderen Seite die sprechseitigen Funktionseinheiten, insbesondere eine Sprechkapsel 18 angeordnet. Diese Funktionseinheiten sind in der unteren Gehäuseschale 14 bevorzugt durch geeignete Befestigungsmittel, insbesondere durch Schnapphalterungen 15 und Halteflächen 115 gehalten. Die Schnapphalterungen 15 entstehen beim Herstellen der unteren Gehäuseschale 14 automatisch mit, z.B. beim Spritzgiessen. Beim Einsetzen der Funktionseinheiten weichen sie kurzfristig elastisch aus und schnappen anschliessend zurück.

Die Hörkapsel 17 ist bis auf die Halteflächen 115 im wesentlichen zylindrisch ausgebildet. Sie besitzt eine ringförmige Dichtlippe und eine flanschartige Auflagefläche. Beim Einsetzen der Hörkapsel 17 in die untere Gehäuseschale 14 schnäbelt erst die Dichtlippe in eine ringförmige Erhöhung 114 ein. Die flanschartige Auflagefläche liegt schliesslich auf der Stirnfläche der Erhöhung auf. Auf diese Weise ergibt sich nur ein sehr geringes Resonanzvolumen zwischen der Hörkapsel 17 und den Schallaustrittsöffnungen 19 der Gehäuseschale 14.

Auf der Seite der Sprechkapsel 18 ist eine nach aussen offene Steckbuchse 21 mit mehreren Kontaktpolen 25 angeordnet, die zur Aufnahme eines nicht gezeigten Steckers der Apparateschnur dienen. Auf der Seite der Sprechkapsel 18 ist weiter ein Trägerteil 22 vorgesehen, das diese Sprechkapsel trägt und das im folgenden näher beschrieben wird.

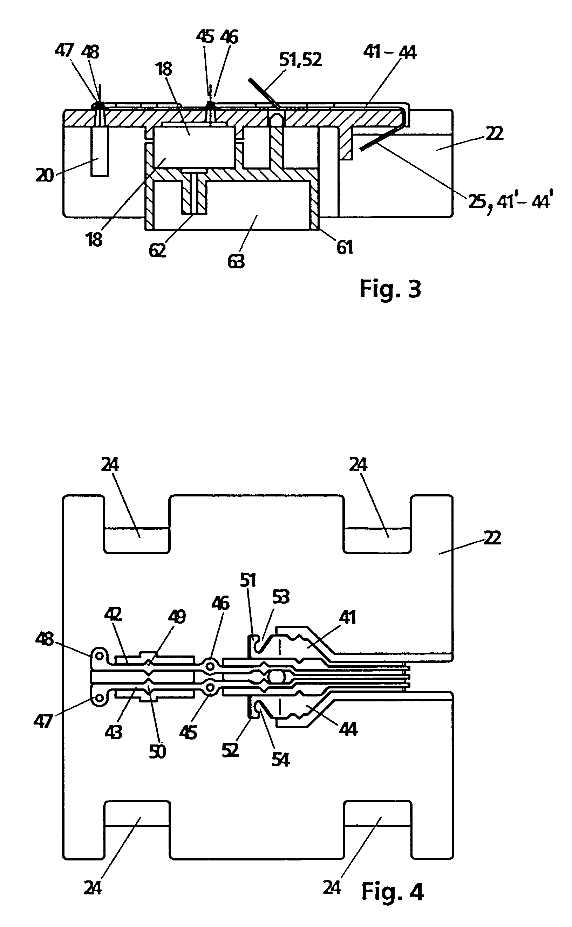

Fig. 3 zeigt das Trägerteil 22 in geschnittener Seitenansicht, Fig. 4 in Aufsicht, jeweils etwa um den Faktor 2 gegenüber den natürlichen Dimensionen vergrössert. Das Trägerteil 22 ist ein Kunststoff-Spritzteil mit erheblichem Gewicht. Es trägt in einer Führung die Sprechkapsel 18 und weiter einen Kondensator 20. Diese Elemente sind mittels ihrer Anschlussdrähte mit Lötaugen 45, 46 bzw. 47, 48 zweier elektrischer Zuleitungen 42, 43 verlötet. Diese Zuleitungen 42, 43 liegen hierzu im wesentlichen plan auf der Oberfläche des Trägerteils 22 so auf, dass die Lötaugen 45-48 jeweils mit einer zugeordneten durchgehenden Öffnung des Trägerteils 22 fluchten. Auf diese Weise lassen sich die genannten Anschlussdrähte problemlos in die Lötstellung bringen.

Parallel zu den genannten Zuleitungen 42, 43 sind zwei weitere Zuleitungen 41, 44 angeordnet, die jedoch nur teilweise auf der Oberfläche des Trägerteils 22 plan aufliegen. Mit ihren einen Enden bilden die weiteren Zuleitungen 41, 44 schräg abgebogene Lötfahnen 51, 52 mit sichelförmigen Löthaken 53, 54. Alle Zuleitungen 41-44 besitzen weiter freie, federelastische, parallel nebeneinander angeordnete Enden 41'-44', die U-förmig zur Oberfläche des Trägerteils 22 gebogen sind und die die Pole 25 der Steckbuchse 21 bilden. Zur Verbesserung der Kontakteigenschaften sind die Kontaktflächen der Enden 41'-44' vergütet, z.B. vergoldet.

Die Leiter 41-44 werden bevorzugt in einem einzigen Stanzvorgang aus Federbronze gestanzt und gebogen, wobei nicht gezeigte Stege die verschiedenen Leiter 41-44 vorerst zusammenhalten. Die Leiter werden sodann als ein einziges Teil in zugeordnete Nuten auf der Oberfläche des Trägerteils 22 eingepresst, wobei sie sich mittels mehrerer Haltezacken 49, 50 in den Nuten verklemmen und damit anschliessend im wesentlichen auf der Oberfläche des Trägerteils 22 fix gehalten sind. In einem abschliessenden Arbeitsschritt werden schliesslich die genannten Stege weggestanzt, wozu weitere durchgehende Öffnungen im Trägerteil 22 an den Stellen dieser Stege vorgesehen sind, durch die der Stanzabfall herausfallen kann.

Das Trägerteil 22 weist schliesslich noch vier Haltepunkte 24 auf, an denen Schnapphaken 16 der unteren Geräteschale 14 angreifen und damit das Trägerteil 22 in dieser Geräteschale starr und stossfest fixieren (Fig. 2). Die Sprechkapsel 18 ist auf ihrer sprachempfindlichen Seite durch ein plastisches Kunststoffteil 61 abgedeckt, wobei ein rohrförmiger Verbindungskanal 62 den akustischen Kontakt mit einem Resonanzraum 63 herstellt. Das plastische Kunststoffteil 61 ist hierzu auf die montierte und verlötete Spechkapsel 18 aufgesteckt und umschliesst im fertig montierten Zustand des Handapparates 11 die Schalleintrittsöffnung 12 der unteren Gehäuseschale 14 dicht (Fig. 1). Auf diese Weise wird der Resonanzraum 63 so geformt, dass sich ein doppelter Helmholtz-Resonator ergibt, der zur Formung des benötigten Sende-Frequenzganges dient.

Im eingesetzen und fixierten Zustand bilden Ausnehmungen des Trägerteils 22 und der unteren Geräteschale 14 zusammen die Führungen und Wandungen der Steckbuchse 21, während die freien Enden 41'-44' der Zuleitungen 41-44 die zugeordneten Pole bilden. Dies ist eine weitere Gegebenheit, bei der durch die geeignete Ausbildung der verbleibenden Elemente des Handapparates 11 ein ansonsten notwendiges Bauteil eliminiert wird. In diesem Fall ist es ein separates Bauteil "Buchse" samt der notwendigen elektrischen Anschlüsse und mechanischen Halterungen.

Das genannte Gewicht des Trägerteils 22 ist notwendig, um dem Handapparat 11 die Schwere zu geben, die er zum Betätigen des sogenannten Gabelschalters im Basisgerät des Telefonapparates aufweisen muss. Dieses Gewicht kommt somit ebenfalls ohne zusätzliches Bauelement und damit billig zustande. Weiter ist wichtig, dass das Trägerteil 22 im Handapparat 11 zusammen mit der Apparateschnur das Gewicht so verteilt, dass der Handapparat 11 bequem und ergonomisch in der Hand des Benutzers liegt.

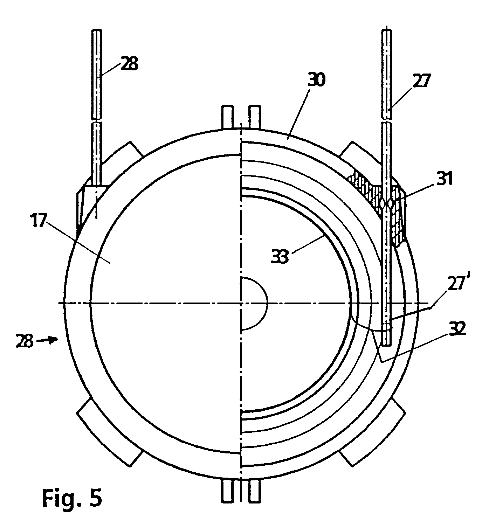

Fig. 5 zeigt im ebenfalls vergrösserten Massstab und in halb geöffneter Aufsicht die Hörkapsel 17. Diese Kapsel umfasst zwei Drähte 27, 28, deren Länge etwa dem Abstand zwischen der Hörkapsel 17 und dem Trägerteil 22 im Handapparat 11 entspricht. Die Drähte 27, 28 sind im wesentlichen steife, nicht isolierte Leitungen mit beliebigem, z.B. rundem Querschnitt. An der Stelle ihres Durchgangs durch die Wandung 30 der Hörkapsel besitzen sie geringfügige, scharfkantige Verdickungen 31, z.B. durch Quetschung entstanden, mit deren Hilfe sie in zugeordneten Wandungs-Bohrungen der Hörkapsel 17 starr verklemmt sind.

Im Inneren der Hörkapsel 17 dienen die Leitungsenden 27', 28' als Träger der sehr dünnen elektrischen Spulenanschlüsse 32 des elektroakustischen Wandlers. Die Herstellung dieser Anschlüsse erfolgt dabei so, dass die Spulenanschlüsse 32 stramm über die Leitungsenden 27', 28' gelegt und verlötet werden, und dass anschliessend die Leitungsenden 27', 28' leicht in Richtung zur Spule 33 verbogen werden, wodurch die Spulenanschlüsse 32 genügend Spiel erhalten für die Bewegung der Spule 33.

Die Montage des Handapparates 11 erfolgt wie nachfolgend beschrieben:
Das Trägerteil 22 bildet eine Vormontage-Einheit, die aus dem eigentlichen Träger, den eingesetzten Zuleitungen 41-44 und der eingesetzten und verlöteten Sprechkapsel 18, dem auf die Sprechkapsel 18 aufgesetzten Kunststoffteil 61 sowie dem Kondensator 20 besteht. Diese Vormontage-Einheit wird in die untere Gehäuseschale 14 eingesetzt und dabei durch die Schnapphaken 16 an den vier Haltepunkten 24 selbstwirkend fixiert.

Die Hörkapsel 17 bildet zusammen mit den Drähten 27, 28 ebenfalls eine einzige Einheit, die in die untere Gehäuseschale 14 unter leichtem Druck einsetzbar ist und mittels der genannten Halteflächen 115 und der Schnapphalterungen 15 fixiert wird. Hierbei reichen die Drähte 27, 28 bis zum Trägerteil 22. Sie lassen sich nun in die Löthaken 53, 54 der Lötfahnen 51, 52 einhaken und anschliessend mit diesen verlöten.

Zum Fertigstellen des Handapparates 11 wird die obere Gehäuseschale 13 auf die untere Schale 14 aufgesetzt und an mehreren Randstellen zusammengeschnappt. Hierdurch entsteht eine erheblich verwindungsresistente Einheit. Zum Schluss wird der Stecker der Apparateschnur in die Steckbuchse 21 eingesteckt. Diese Montage-Schritte sind offensichtlich sehr einfach und eignen sich sowohl zum Automatisieren als auch zur einfachen Handmontage.

Es sind nun eine ganze Reihe von Variationen möglich, die dem grundsätzlichen Erfindungsgedanken unterliegen. Im folgenden werden einige dieser Varianten explizit genannt:
- Die vier Zuleitungen 41-44 müssen elektrisch gegeneinander isoliert und mechanisch im wesentlichen starr gehalten sein. Hierfür gibt es ausser der beschriebenen Ausführungsform noch andere Möglichkeiten, zum Beispiel Verkleben oder Verschweissen, Umspritzen usw.
- Es können mehr als vier Zuleitungen 41-44 vorgesehen sein.
- Die Zuleitungen 41-44 können sich auf unterschiedlichen Ebenen kreuzen.
- Das Trägerteil 22 kann in anderer Form und anders als durch Spritzguss hergestellt sein, z.B. im Formpressverfahren. Es ist jedoch besonders vorteilhaft, wenn als Spritzgussmaterial thermoplastischer Kunststoff benützt wird, der als allgemeines Recycling-Material bei anderen Prozessen anfällt. Dies ist möglich, da das Trägerteil 22 keine wesentlichen Forderungen bezüglich seiner mechanischen Toleranzen, seiner elektrischen Isolier-Eigenschaften und/oder seines ästhetischen Aussehens erfüllen muss. Das Trägerteil 22 kann weiter statt aus thermoplastischem Kunststoff aus grundsätzlich anderem, elektrisch nichtleitendem Material wie Bakelit, Hartgummi, Keramik usw. hergestellt sein.
- Die Zuleitungen 41-44 können anstatt als Stanzleiter als flexible, geätzte, folienartige Leiter ausgebildet sein. Hierbei können die Enden 41'-44' durch zusätzliche Federelement ergänzt sein.
- Die Gehäuseschalen 13, 14 können miteinander verschraubbar oder in sonstiger Weise kraftschlüssig miteinander verbindbar ausgebildet sein.
- Die Drähte 27, 28 können wie in Fig. 2 dargestellt im wesentlichen geradlinig und V-förmig zusammenlaufend oder auch anders, z.B parallel oder bogenförmig verlaufend ausgebildet sein. Die elektrische und mechanische Verbindung in den Löthaken 53, 54 kann statt durch Löten auch durch z.B. Schneidklemmen erfolgen.
- Der Kondensator 20 kann weggelassen werden; oder es können zusätzliche elektrische/elektronische Bauelemente am Trägerteil 22 angeordnet sein.
- Die sprech- und hörseitigen Funktionseinheiten können von der oberen Gehäuseschale 13 gehalten werden. Weiter kann die eine Funktionseinheit in der oberen 13 und die andere Funktionseinheit in der unteren Gehäuseschale 14 gehalten sein.
- Das Kunststoffteil 61 kann auch aus z.B. Gummi gefertigt sein. Es kann auf die Sprechkapsel 18 aufgesteckt sein oder vom Trägerteil 22 gehalten werden.

In jedem Fall ergibt sich durch die geschilderten Teile und Massnahmen ein Handapparat 11, dessen Aufbau deutlich weniger Einzelteile als alle bisherigen, bekannten Handapparate benötigt. Dies wirkt sich entscheidend auf die Herstellungskosten aus, während die Qualitätsanforderungen bezüglich elektrischer Sicherheit, akustischer Güte, Gebrauchstüchtigkeit und Lebensdauer gegenüber dem bisher Bekannten eher noch gesteigert sind. Weiter ergibt sich eine technische Bauweise, die bezüglich der ästhetischen Formgebung des Handapparates flexibel und anpassungsfähig ist. Insbesondere ist eine sehr flache Bauweise des Handapparates 11 möglich.

## Patentansprüche

1. Handapparat (11) eines schnurgebundenen Telefonapparates, umfassend
- zwei aufeinander abgestimmte Gehäuseschalen (13, 14), die im zusammengesetzten Zustand gemeinsam eine im wesentlichen allseitig geschlossene Einheit bilden, die durch erste Haltemittel mechanisch zusammengehalten wird,
- hörseitige Funktionseinheiten in Form wenigstens einer Hörkapsel (17), die durch zweite Haltemittel in einer der Gehäuseschalen (13, 14) gehalten ist,
- sprechseitige Funktionseinheiten in Form wenigstens einer Sprechkapsel (18) und eines dieser zugeordneten Helmholtz-Resonators, welche Funktionseinheiten durch dritten Haltemittel, ebenfalls in einer der Gehäuseschalen (13, 14) gehalten sind,
- eine mehrpolige Steckbuchse (21) zur Aufnahme des Steckers einer Apparateschnur, die den Handapparat (11) mit dem Basisapparat des Telefonapparates verbindet, und
- elektrische Zuleitungen, die die Hör- (17) und die Sprechkapsel (18) mit den Polen der Steckbuchse (21) elektrisch verbinden,
dadurch gekennzeichnet,
- dass sprechseitig ein Trägerteil (22) aus elektrisch isolierendem Material vorgesehen ist,
- dass das Trägerteil (22) wenigstens die Sprechkapsel (18) und zumindest teilweise die elektrischen Zuleitungen (41-44) trägt,
- dass das Trägerteil (22) ausgebildet ist zum Zusammenstecken und Zusammenwirken mit der einen der beiden Gehäuseschalen (14), derart, dass diese (14, 22) durch die dritten Haltemittel mechanisch fix und unverlierbar zusammenhalten, dass diese (14, 22) zusammen die mechanischen Führungsteile der Steckbuchse (21) bilden, und dass sich zumindest teilweise der Helmholtz-Resonator ergibt, und
- dass die elektrischen Zuleitungen (41-44) freie Enden (41'-44') aufweisen, die die Pole der Steckbuchse (21) bilden.

2. Handapparat nach Anspruch 1,
dadurch gekennzeichnet,
dass das Trägerteil (22) aus thermoplastischem Kunststoff besteht.

3. Handapparat nach Anspruch 2,
dadurch gekennzeichnet,
dass das Trägerteil (22) Haltepunkte (24) aufweist zum Zusammenwirken mit Schnapphaken (16) der einen Gehäuseschale (14), durchgehende Löcher aufweist zum Durchführen wenigstens der elektrischen Anschlüsse der Sprechkapsel (18), und Führungsnuten aufweist für die elektrischen Zuleitungen (41-44).

4. Handapparat nach Anspruch 2,
dadurch gekennzeichnet,
dass das Trägerteil (22) so massiv ausgebildet ist, dass es wesentlich zur Bereitstellung des zum Betätigen des Gabelschalters des Basisapparates notwendigen Gewichts des Handapparates (11) beiträgt.

5. Handapparat nach Anspruch 1,
dadurch gekennzeichnet,
dass ein plastisches Kunststoffteil (61) vorgesehen ist, welches so auf die Sprechkapsel (18), das Trägerteil (22) und die untere Gehäuseschale (14) abgestimmt ist, dass sich insgesamt ein der Sprechkapsel (18) zugeordneter, doppelter Helmholtz-Resonator ergibt.

6. Handapparat nach Anspruch 3,
dadurch gekennzeichnet,
- dass die Zuleitungen (41-44) als Stanzleiter aus federelastischem Metall gebildet sind,
- dass Haltepunkte (49, 50) vorgesehen sind, die zum Verklemmen der Stanzleiter in den Führungsnuten des Trägerteils (22) dienen, und
- dass Verbindungsstellen (45-48, 53, 54) vorgesehen sind zum elektrischen Verbinden der Stanzleiter mit der Hör- (17) und der Sprechkapsel (18).

7. Handapparat nach Anspruch 6,
dadurch gekennzeichnet.
dass die freien Enden (41'-44') die einen Schenkel U-förmiger Biegungen der Stanzleiter bilden, und dass die so gebildeten Kontaktpole (25) an den Kontaktflächen der Steckbuchse (21) oberflächenvergütet sind.

8. Handapparat nach Anspruch 1,
dadurch gekennzeichnet,
- dass die Hörkapsel (17) zwei steife elektrische Drähte (27, 28) umfasst, deren Länge im wesentlichen dem Abstand zwischen der Hörkapsel (17) und dem Trägerteil (22) im Handapparat (11) entspricht, und
- dass jeder der Drähte (27, 28) mit einer der Zuleitungen (41, 44) verbunden ist.

9. Handapparat nach Anspruch 8,
dadurch gekennzeichnet,
dass die Drähte (27, 28) beliebigen Querschnitt aufweisen, durch die Wandung (30) der Hörkapsel (17) mechanisch steif gehalten sind und im Inneren der Hörkapsel (17) die elektrischen Anschlüsse (32) des elektroakustischen Wandlers der Kapsel tragen.

10. Verfahren zur Herstellung eines Handapparates (11) eines schnurgebundenen Telefonapparates entsprechend den vorhergehenden Ansprüchen,
dadurch gekennzeichnet,
- dass das Trägerteil (22) samt des Kunststoffteils (61) und die Hörkapsel (17) samt der Drähte (27, 28) als zwei vormontierte Teile bereitgestellt werden,
- dass das Trägerteil (22) und anschliessend die Hörkapsel (17) in die eine Gehäuseschale (14) eingeschnappt werden,
- dass die Drähte (27, 28) mit den zugeordneten Zuleitungen (41, 44) elektrisch verbunden werden, und
- dass schliesslich die Gehäuseschalen (13, 14) miteinander vereinigt werden und der Stecker der Apparateschnur in die Buchse (21) eingesteckt wird.
